# EUROPÄISCHE PATENTANMELDUNG

(11) **EP 2 161 299 A1**
(43) Veröffentlichungstag der Anmeldung: **10.03.2010**
(21) Anmeldenummer: 08015525.2
(22) Anmeldetag: 04.09.2008
(51) Int. Cl.: C08J 11/10, C08J 11/16, C10G 1/10, B01J 19/18, B01J 19/32

(54) **Thermokatalytische Depolymerisation von Kunststoffabfällen, Anlage für thermokatalytische Depolymerisation von Kunststoffabfällen und Reaktor für thermokatalytische Depolymerisation von Kunststoffabfällen**

(71) Anmelder: Handerek, Adam, 43-300 Bielsko-Biala (PL); Schlüter, Hartwig, 34260 Kaufungen (DE)
(72) Erfinder: Handerek, Adam, 43-300 Bielsko-Biala (PL)
(74) Vertreter: Lins, Edgar

(57) **Zusammenfassung**

Das Verfahren zeichnet sich dadurch aus, dass das flüssige Reaktionsgemisch im thermokatalytischen Reaktor (6) vermischt und in mindestens zwei Schichten separiert wird, die sich auf verschiedenen Niveaus befinden, wobei jede Schicht unabhängig von der anderen mittels quer verlaufender Heizelemente angewärmt wird, die vorteilhafterweise in Form von Elektrotauchsiedern (10) in Rohrverkleidung angebracht sind, die in Pakete verblockt und vorteilhafterweise mit CO₂ oder einem anderen Inertgas stabilisiert wird. Vorteilhafterweise werden die Gasprodukte der katalytischen Reaktion vor der Zufuhr zum Fraktionierkondensator durch eine Katalysatorschicht in der Vorrichtung für sekundäre Depolymerisation durchgelassen.

Die Anlage zeichnet sich dadurch aus, dass sie über die Vorrichtung für sekundäre Depolymerisation verfügt, in der die Gasprodukte der katalytischen Reaktion aus dem thermokatalytischen Reaktor (6) in Anwesenheit des Katalysators depolymerisiert werden.

Der thermokatalytische Reaktor (6) zeichnet sich dadurch aus, dass er über mindestens ein oberes Überlaufniveau für das Reaktionsgemisch verfügt, das sich über dem Spiegel des Reaktionsgemisches auf dem Gehäuseboden (7) befindet, wobei es die Form von perforierten quer angebrachten Überlaufplatten (13) aufweist. Das Reaktionsgemisch weist auf jedem Niveau eine unabhängige Heizung, vorteilhafterweise mit quer und zentripetal verlaufenden Elektrotauchsiedern (10), auf, die in der unteren Schicht des Reaktionsgemisches eingetaucht sind und sich möglichst nahe oberhalb oder unterhalb der Überlaufplatten (13) befinden. Die Rühr- und Hebevorrichtung der Flüssigkeit auf die Überlaufplatte (13) bildet eine Rührpumpe (12). Im Reaktor sind Einblasrohre (14) installiert, die das von der stabilisierenden Zirkulation der Elektrotauchsieder (10) kommende Gas zum Reaktionsgemisch zuführen.

## Beschreibung

Gegenstand der Erfindung sind die thermokatalytische Depolymerisation von Kunststoffabfällen, eine Anlage für thermokatalytische Depolymerisation von Kunststoffabfällen und ein Reaktor für thermokatalytische Depolymerisation von Kunststoffabfällen. Das Verfahren, die Anlage und der Reaktor sind für die Depolymerisation von Polyolefinen (PO) und Polystyren besonders geeignet.

Aus der polnischen Patentbeschreibung PL 188936 ist eine Anlage für die Umwandlung von Polyolefinabfällen in flüssige Kohlenwasserstoffe bekannt. Die Anlage besteht aus einem Reaktor in Form eines senkrechten Behälters mit einem Einfüllschacht, der mit einem Dosierer des Polyolefinrohstoffes und des Katalysators verbunden ist; einem Abgasauslaufstutzen, einem Produktabnahmestutzen, einem Rührwerk, einer Siebtrennkammer und einem Heizsystem in Form einer den Behälter von unten umringenden Brennkammer. Die Brennkammer wird mit mindestens einem mit Reaktionsprodukten beschickten Brenner beheizt. Der Reaktor besitzt ein Heizsystem in Form einer ihn von unten umringenden Brennkammer, die vorteilhafterweise mit mindestens einem mit Reaktionsprodukten beschickten Brenner beheizt wird, wobei in der Brennkammer, symmetrisch auf dem Reaktorumfang, vorteilhafterweise in einigen Reihen Durchlaufheizrohre verteilt sind, die durch den Reaktorinnenraum oberhalb der oberen Rührwerkkante durchlaufen und durch die Siebtrennwand an die Abgaskammer angeschlossen sind. Darüber hinaus enthält die Anlage einen Produktkondensator, einen Pufferbehälter des Rohproduktes und einen Destillieraufsatz. Der Pufferbehälter ist mit einem Füllstandsensor ausgestattet, der an das automatische Steuerungssystem der Vorrichtung, die die Rohstoffe zum Reaktor dosiert, angeschlossen ist.

Der zerkleinerte Polyolefinrohstoff mit einem Katalysator aus der Zemente, Schwermetallsilikate und Schwermetall-Kolophoniumsalze umfassenden Gruppe werden zu dem Reaktor zugeführt, in dem eine allmähliche Erhitzung bis auf die maximale Temperatur von 600°C erfolgt. Reaktionsprodukte, die durch den Produktabnahmestutzen aus dem Reaktor herauskommen, werden zum Kondensator hingeleitet, in dem sie abgekühlt und verflüssigt werden und dann zum Pufferbehälter weitergeleitet, der bis 40°C erhitzt wird. Aus dem Pufferbehälter wird das Rohprodukt zum Destillieraufsatz geleitet, wo das Fraktionieren in verschiedene Siedetemperaturen erfolgt. Das gewonnene Produkt kann als Rohstoff für die Herstellung von Benzin, Treiböl und Ökoheizöl verwendet werden.

Aus der polnischen Patentanmeldung P352344 ist ein Reaktorsatz für kontinuierliche thermokatalytische Transformation von Kunststoffabfällen, insbesondere Polyolefinkunststoffabfällen bekannt, der eine Heizbatterie mit einer Brennkammer und mindestens einen Brenner sowie einen thermokatalytischen Reaktor mit Katalysator besitzt. Die aus feuerfester Keramik angefertigte Brennkammer enthält im Innenraum einen das Gas des Sägemehlgasifizierers verbrennenden Brenner, befindet sich in einem Gehäuse aus Perlitziegeln und Mineralwolle und ist von außen mit Blech verkleidet. Im oberen Gehäuseteil befindet sich eine Zwischenheizkammer mit Gussrostwärmesperren, die von Schamottenböcken gestützt werden. Über der Zwischenheizkammer gibt es den Doppelgefälle-Boden des katalytischen Reaktors. Der katalytische Reaktor weist die Form eines waagrechten Gefäßes mit einem Querschnitt auf, der an ein mit dem Steg nach oben gerichtetes U-Profil erinnert, sowie eine Ober- und zwei Seitenkammern. In der Oberkammer befindet sich ein Kühlerkanal, der weiter in den Ableitungskanal für flüchtige Fraktion mündet, der zum Kühler führt. Der Kühlerkanal enthält einen Einfang für die verflüssigten Gase. Das untere Reaktorteil bildet eine Doppelgefälle-Wanne.

Aus der polnischen Beschreibung der Patentanmeldung P 356491 ist ein Verfahren der kontinuierlichen Verarbeitung von Polyolefinkunststoffabfällen zum Gemisch von ungesättigten und gesättigten Kohlenwasserstoffen bekannt, bei der die Charge portioniert, in das technologische Betriebsverfahren kontinuierlich unter Druck geladen, in der Schmelze plastifiziert, in den Tauscher eingepresst, in den flüssigen Zustand gebracht wird, mit dem gleichmäßig in der Reaktionsmasse verteilten Katalysator katalytisch transformiert, sich als Gas zum Kühler ableitet und verflüssigt. Die plastifizierte Charge schmilzt im Tauscher auf und bewegt sich dann gravitationsmäßig zum Stabilisator.

Aus der polnischen Patentanmeldung P 358774 ist ein Verfahren der kontinuierlichen Verarbeitung von Polyolefinkunststoffabfällen zum Gemisch von ungesättigten und gesättigten Kohlenwasserstoffen, die ein hochqualitatives Paraffin bilden, bekannt, bei der die Charge kontinuierlich geladen wird, in der Schmelze plastifiziert wird, sich verflüssigt und thermokatalytisch transformiert, wobei der gesamte Prozess von der Beschickung bis zur Abnahme des Gasproduktes und der Beseitigung von Verunreinigungen in einer Etappe in einem Innengefäß der eingebauten Schmelze-Tauscher-Reaktor-Vorrichtung mit dem senkrechten System geführt wird und sich aus der plastifizierten verflüssigten Charge ein einheitlicher Beschickungsmasseblock bildet, der sich gravitationsmäßig absetzt. Die Vorrichtung für die Durchführung des Prozesses nach diesem Verfahren ist **dadurch gekennzeichnet, dass** sie eine integrierte Schmelze-Tauscher-Reaktoranlage mit dem senkrechten System bildet, in der der gesamte Prozess von der Beschickung bis zur Abnahme des Gasproduktes und der Beseitigung von Verunreinigungen in einem Innengefäß in einer Etappe verläuft. Das Beschickungsmaterial wird durch einen Einfülltrichter zugeführt, das Gasprodukt wird mittels eines Kanals im Gefäßboden abgenommen und die Verunreinigungen werden in einem Behälter außerhalb des Gefäßes gesammelt.

Aus der polnischen Patentanmeldung P 372777 ist eine Anlage für den Prozess der thermischen Depolymerisation von Kunststoffabfällen in Form eines Reaktors mit Turbinenrührwerken und Paketen von Röhrenvorwärmern bekannt, die abwechselnd in einem langen, schmalen und flachen Kasten angebracht sind und sich stets unter der Oberfläche des verschmolzenen Kunststoffes befinden, der zu der Vorrichtung mit einer Sammlerleitung zugeführt wird. Die Röhrenvorwärmer werden mit einer Flüssigkeit mit der Temperatur von 500°C, vorteilhafterweise einem niedrigschmelzendem Metall, zum Beispiel der Wood-Legierung, gespeist. Zwischen den Rührwerken und Vorwärmerpaketen befinden sich vertikale Trennwände, die die Reaktorseiten nicht schließen und einen Längsflüssigkeitsdurchlauf im Vorwärmer sichern. Mit dem Reaktor ist ein mehrsegmentärer Dampfkondensator gekoppelt, der mit senkrechten Röhrenwärmetauschern, die in Teilkammern mit individuellen Ventilatorkühlern gruppiert sind, ausgestattet ist. In jeder Teilkammer bildet eine andere Flüssigkeit das Kühlmittel mit einer die Kondensation der gewählten Fraktion sicherstellenden Temperatur.

Das Verfahren der thermischen Depolymerisation von Kunststoffabfällen beruht darauf, dass aus Dunsten der Depolymerisationsprodukte ein Teil der Fraktion mit einem hohen Siedepunkt selektiv kondensiert wird und die Flüssigkeit mit neuen Kunststoffportionen im Verhältnis und unter Temperaturen gemischt wird, in denen noch keine Depolymerisation und bei der Abkühlung auf die Umgebungstemperatur keine Verhärtung erfolgen; danach wird sie erneut in den Reaktor eingeführt und in einer möglichst dünnen Schicht in den Röhrenvorwärmerteilkammern depolymerisiert, die mit einer Flüssigkeit mit einer Temperatur bis 500°C, vorteilhafterweise mit einem niedrigschmelzenden Metall und insbesondere der Wood-Legierung gespeist werden.

Die Ausbeute des bisher bekannten Prozesses beträgt im Allgemeinen ca. 60 % des Handelsproduktes im Verhältnis zu der Charge.

Das Wesentliche an dem erfindungsgemäßen Verfahren der thermokatalytischen Depolymerisation von Kunststoffabfällen und insbesondere Polyolefinkunststoffabfällen zum Gemisch von ungesättigten und gesättigten Kohlenwasserstoffen, bei der der zerkleinerte Rohstoff in der Schmelze plastifiziert, durch Erhitzen in den flüssigen Zustand gebracht wird, im thermokatalytischen Reaktor in Anwesenheit eines Katalysators katalytisch transformiert und die Reaktionsprodukte als Gase zum Fraktionierkondensator abgeleitet werden, in dem es abgekühlt, verflüssigt und in Fraktionen mit verschiedenen Siedepunkten geteilt wird, ist, dass das flüssige Reaktionsgemisch in dem thermokatalytischen Reaktor gemischt und in mindestens zwei Schichten separiert wird, die sich auf verschiedenen Niveaus befinden, wobei jede Schicht unabhängig von der anderen mittels Heizelementen angewärmt wird, die prinzipiell quer zu der vertikalen Reaktorachse verlaufen, vorteilhafterweise in Form von Elektrotauchsiedern in Rohrverkleidung, die in Pakete verblockt und vorteilhafterweise mit Inertgasen, vorteilhafterweise mit Co₂ oder Metalloxiden stabilisiert werden. Das Reaktionsgemisch wird vorteilhafterweise vermischt, separiert und mittels einer Rührpumpe, vorteilhafterweise einer Propellerhydropumpe von einer hohen Leistung hochgehoben, wobei das Gemisch auf perforierte Überlaufplatten oder Überlaufrinnen zugeführt wird, die sich oberhalb des Gemischunterschichtspiegels quer zur vertikalen Reaktorachse befinden. Vorteilhafterweise wird die kinetische und thermische Energie des Reaktionsgemischs durch pneumatisches Rühren unter Anwendung von CO₂ oder eines anderen Inertgases unterstützt, wobei vorteilhafterweise das Gas aus dem stabilisierenden Umlauf der Elektrotauchsieder eingesetzt wird. Vorteilhafterweise werden die Gasprodukte aus der katalytischen Reaktion vor der Zufuhr zum Fraktionierkondensator durch eine poröse Katalysatorschicht, vorteilhafterweise als Granulat, das in der Vorrichtung für die sekundäre Depolymerisation enthalten ist, durchgelassen. Vorteilhafterweise werden die nicht verflüssigten Nachkondensationsgase aus dem Fraktionierkondensator zum Stromerzeugungsaggregat zugeführt, das aus einem Verbrennungsmotor und einem Stromgenerator besteht, wobei die - erzeugte Elektroenergie vorteilhafterweise für die Speisung der Elektrotauchsiedern und anderer Anlagevorrichtungen benutzt wird. Der Katalysator wird vorteilhafterweise in Dosen oder kontinuierlich zum thermokatalytischen Reaktor zugeführt. Der Katalysator wird vorteilhafterweise in Dosen oder kontinuierlich zum Behälter der Vorrichtung für die sekundäre Depolymerisation zugeführt. Der verbrauchte Katalysator wird vorteilhafterweise in dem Reaktorverfahren samt dem im Reaktor entstandenen Karbonisat aus dem Reaktor auf das vorteilhafterweise keramische Filter mit ÖI-Rezyklus zum thermokatalytischen Reaktor abgeleitet.

Die erfindungsgemäße Anlage für die thermokatalytische Depolymerisation von Kunststoffabfällen und insbesondere Polyolefinkunststoffabfällen, die aus einem Vorratsbehälter, einem Rohstoffzubringer, einer Schmelze, einem Vorwärmer und einem thermokatalytischen Reaktor mit Heizelementen, der mit dem Fraktionierkondensator verbunden ist, besteht, ist **dadurch gekennzeichnet, dass** die Anlage eine Vorrichtung für die sekundäre Depolymerisation besitzt, in der in Anwesenheit des Katalysators Gasprodukte der katalytischen Reaktion aus dem thermokatalytischen Reaktor depolymerisiert werden, wobei diese Vorrichtung mit dem Reaktor mittels eines die Gasprodukte zuführenden Stutzens und mit dem Fraktionierkondensator mittels eines die Gasprodukte abnehmenden Stutzens verbunden ist. Vorteilhafterweise weist die Vorrichtung für die sekundäre Depolymerisation die Form eines senkrechten Durchlaufbehälters auf, der mit einer porösen Katalysatorschicht, vorteilhafterweise in Granulatform aufgefüllt ist.

Vorteilhafterweise weist die Anlage für die sekundäre Depolymerisation einen Katalysatorzubringer sowie eine Vorrichtung für die Ableitung des verbrauchten Katalysators auf. Vorteilhafterweise weist der thermokatalytische Reaktor eine Vorrichtung in Form einer Rührpumpe für die Separierung der flüssigen Reaktionsmasse in Schichten auf, die übereinander gelegen sind, waagrechte Überlaufplatten oder Überlaufrinnen, die über dem Reaktionsgemischspiegel angebracht sind, sowie diesen Schichten zugeordnete Heizelemente. Vorteilhafterweise bilden die Heizelemente des thermokatalytischen Reaktors Elektrotauchsieder, die in Pakete verblockten Röhren gesetzt und getrennt in Öffnungen auf dem Gehäuseumfang befestigt, zentripetal gerichtet und auf zwei Niveaus gelegen sind - unten in der Nähe des Reaktorbodens und oben - oberhalb oder unterhalb der porösen Überlaufplatten oder Überlaufrinnen, die sich über dem Spiegel der flüssigen Reaktionsmasse befinden, quer zu der senkrechten Gehäuseachse. Die Elektrotauchsieder bilden Heizelemente in Rohrverkleidungen, die mit Kohlendioxid CO₂ oder einem anderen Inertgas stabilisiert werden. Vorteilhafterweise weist der Reaktor innen installierte Einblasrohre auf, die CO₂ oder ein anderes Inertgas, das aus Elektrotauchsiederrohren entnommen wurde, zum Reaktionsgemisch zuführen und den Effekt des pneumatischen Rührens sowie eines zusätzlichen Gemischanheizens bewirken. Vorteilhafterweise weist der katalytische Reaktor einen Katalysatordosierer mit einem Zubringer und im unteren Teil eine Vorrichtung für die Ableitung des verbrauchten Katalysators mit dem Karbonisat, dem ÖI-Rezyklus zum Reaktor, auf, wobei diese Vorrichtung vorteilhaftweise eine Zahnradpumpe und ein keramisches Filter besitzt. Vorteilhaftweise ist der Fraktionierkondensator mit einer Rohrleitung verbunden, die die nicht verflüssigten Nachkondensationsgase abführt, und mit einem Stromgeneratorsatz, der aus einem Verbrennungsmotor und einem Stromerzeugungsaggregat besteht.

Die den Reaktor für thermokatalytische Depolymerisation von Kunststoffabfällen mit einem Gehäuse in Form eines thermoisolierten geschlossenen Gefäßes, innerhalb dessen Rohrheizelemente und eine Rührvorrichtung installiert sind, betreffende Erfindung ist **dadurch kennzeichnet, dass** sie mindestens ein oberes Überlaufniveau für das Reaktionsgemisch besitzt, das sich über dem Spiegel des Reaktionsgemisches auf dem Gehäuseboden befindet; dieses Überlaufniveau weist die Form von perforierten Überlaufplatten oder Überlaufrinnen auf, die quer zu der senkrechten Gehäuseachse verlaufen, wobei das Reaktionsgemisch auf jedem Niveau eine unabhängige Heizung mit Heizelementen besitzt, die auf quer zur senkrechten Gehäuseachse gelegenen Flächen verlaufen, in der unteren Schicht des Reaktionsgemisches eingetaucht sind und sich möglichst nahe oberhalb oder unterhalb der Überlaufplatten befinden; wobei die Rühr- und Hebevorrichtung für die Flüssigkeit eine Elektromotorrührpumpe bildet, die in der Nähe des Reaktorbodens angebracht ist. Vorteilhaftweise weisen die Heizelemente die Form von Elektrotauchsiedern in Rohrverkleidung auf, die vorteilhafterweise mit CO₂ oder anderen Inertgasen stabilisiert werden, wobei die Tauchsieder in Pakete verblockt, getrennt in Öffnungen auf dem Gehäuseumfang befestigt und zentripetal gerichtet sind. Vorteilhafterweise weist das Gehäuse die Form eines mit Ober- und Unterdeckeln geschlossenen Gefäßes auf, wobei der den Boden bildende Unterdeckel und der Oberdeckel vorteilhafterweise die Form von nach außen konvexen Konen aufweisen. Vorteilhafterweise befindet sich die Rührpumpe in einem senkrecht und zentral in der unteren Reaktionsgemischschicht angebrachten zylindrischen Überlauftrichter. Vorteilhafterweise weist es in dem Unterteil eine Vorrichtung für kontinuierliche Ableitung des verbrauchten Katalysators und Karbonisates auf, vorteilhafterweise in Form einer Pumpe und eines vorteilhafterweise keramischen Filters mit dem ÖI-Rezyklus zum thermokatalytischen Reaktor. Vorteilhafterweise weist der Reaktor innerhalb des Gehäuses Einblasrohre auf, die mit den Elektrotauchsiederrohren verbunden sind, von den Tauchsiedern CO₂ oder ein anderes Inertgas entnehmen und zum Reaktionsgemisch der unteren Schicht im Reaktorboden ableiten und den Effekt des pneumatischen Rührens sowie eines zusätzlichen Gemischanheizens bewirken. Vorteilhafterweise ist der Reaktor mit einem Katalysatordosierer ausgestattet. Vorteilhafterweise verfügt der Katalysatordosierer über einen Katalysatorzubringer.

Die Lösung gemäß dieser Erfindung ist gekennzeichnet durch eine hohe Prozessausbeute und ermöglicht die Erreichung von ca. 90 % des Handelsproduktes im Verhältnis zu der Charge, was einen erheblichen Anstieg im Vergleich zu den bekannten Verfahren bedeutet. Der Einsatz von Elektrotauchsiedern im Reaktor, die durch den Kohlendioxiddurchfluss stabilisiert werden, ermöglicht den Betrieb auf einem niedrigen Temperaturgradienten und dem thermischen Hauptwiderstand des Wärmeaustausches an der Seite der verschmolzenen Rohstoffmasse und der Depolymerisationsprodukte. Dadurch wird bei gleichzeitigem intensivem Rühren die Bildung größerer Karbonisatmengen verhindert und eine präzise Temperatursteuerung infolge einer minimalen thermischen Trägheit der Heizelemente ermöglicht. Eine größere Verdampfungsfläche im Reaktor, die durch die Separation des beheizten Produktes in Schichten und eine unabhängige Beheizung der Überlaufplatten sowie die Nutzung des Effekts des pneumatischen Rührens des Reaktionsgemisches mit heißem Kohlendioxid erreicht wird, ermöglicht ein schnelles Herauskommen aus der Reaktions- und Kontaktzone der flüchtigen Produkte mit dem Katalysator in jeweiliger Temperatur und unter einem bestimmten Druck und verhindert das ungünstige Entstehen von Gasübermengen. Die Überflusspumpe mit einer hohen Leistungsfähigkeit stellt eine schnelle Homogenisierung des Reaktionsgemisches mit neuen Partien des verschmolzenen Rohstoffes sicher, der aus der Schmelze unter einem geringen Druck regelmäßig zugeführt wird und verhindert eine lokale Temperatursenkung im Reaktor im Zufuhrpunkt des verschmolzenen Rohstoffes.

Die Nutzung der nicht verflüssigten Nachkondensationsgase zum Antrieb des Stromerzeugungsaggregates reduziert wesentlich die Betriebskosten der Anlage.

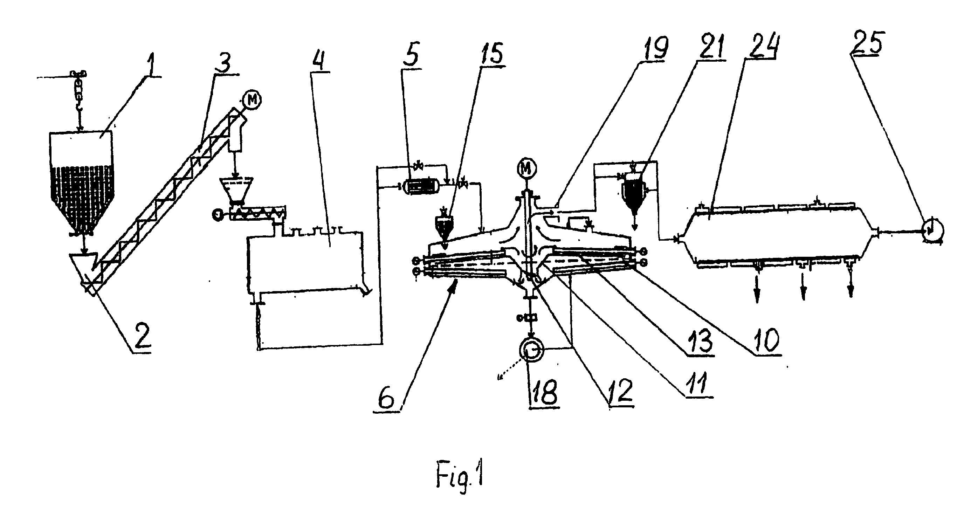

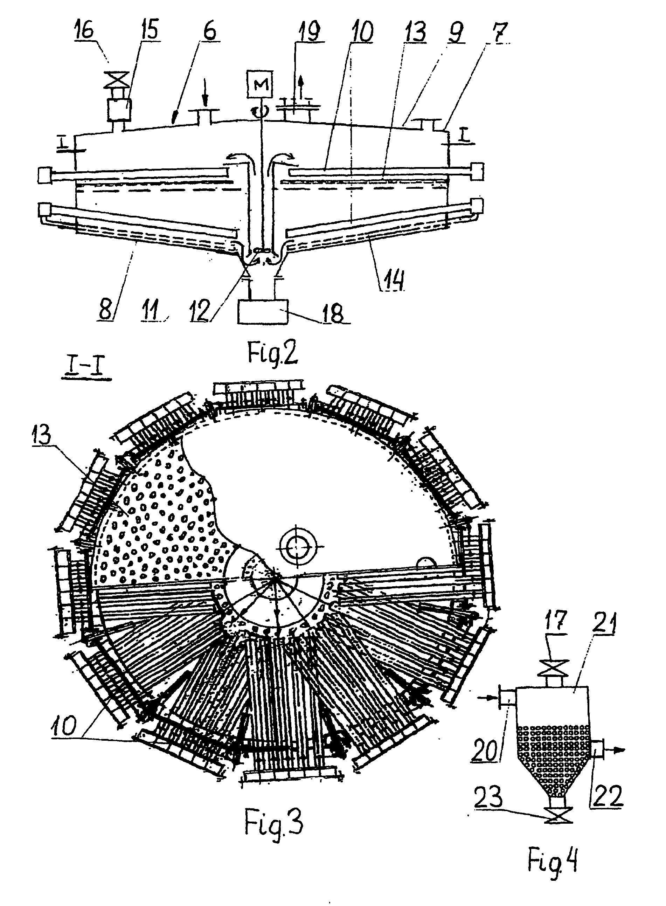

Die Lösung gemäß der Erfindung wurde in Ausführbeispielen und in den Zeichnungen, in denen die Figur 1 ein Schaltschema der Anlage für die thermokatalytische Depolymerisation von Kunststoffabfällen im Achsenschnitt darstellt, die Figur 2 den Reaktor für die thermokatalytische Depolymerisation von Kunststoffabfällen im Achsenschnitt schematisch darstellt, die Figur 3 den Reaktor im Querschnitt der Fläche I-I in Figur 2 und die Figur 4 die Vorrichtung für sekundäre Depolymeriastion schematisch darstellt, genauer erklärt.

### Beispiel I

Die Anlage für die thermokatalytische Depolymerisation von Kunststoffabfällen enthält einen Rohstoffvorratsbehälter 1, in dem sich zerkleinerte Abfälle des verarbeiteten Polyolefin- und Polystyrenrohstoffs befinden, und einen darunter angebrachten Einfülltrichter 2 mit einer Transportschnecke 3, die den Rohstoff zur Schmelze 4 transportiert, wo er auf eine Temperatur von 180°C erhitzt und plastifiziert wird. Die Schmelze 4 ist mit einer Rohrleitung durch den Vorwärmer 5 mit dem thermokatalytischen Reaktor 6 verbunden. Der thermokatalytische Reaktor 6 weist ein Gehäuse 7 in Form eines zylindrischen Gefäßes auf, dessen Boden 8 und Oberdeckel 9 die Form von nach außen konvexen Konen aufweist. Im Reaktor 6 befinden sich Elektrotauchsieder 10 in Form von Heizelementen in Rohrverkleidung, die in Öffnungen auf dem Gehäuseumfang 7 angebracht sind. Die Temperatur der Elektrotauchsieder 10 wird mit Kohlendioxid CO₂ einem anderen Inertgas oder Metalloxiden stabilisiert. Die Rohre mit den innen angebrachten Elektrotauchsiedern sind in Pakete von jeweils einigen Stücken verblockt und auf dem Umfang gleichmäßig und zentripetal verteilt. Die Elektrotauchsieder sind im Gehäuse, in Öffnungen auf dem Gehäuseumfang, getrennt befestigt und die Demontage erfolgt durch die Herausnahme der Rohre aus den Öffnungen, was eine leichte Beseitigung des abgesetzten Karbonisat oder Austausch der defekten Tauchsieder ermöglicht. Die Elektrotauchsiederpakete sind auf zwei Niveaus angebracht, von denen sich das untere in der Nähe des Bodens 8 befindet, wo die Tauchsieder im Reaktionsgemisch völlig eingetaucht sind. Die Elektrotauchsieder des oberen Niveaus befinden sich möglichst nahe der perforierten Metallüberlaufplatten 13 (ober- oder unterhalb der Platten), die quer zur senkrechten Reaktorachse über dem Spiegel der Reaktionsgemischschicht des unteren Niveaus angebracht sind. Innerhalb des Gehäuses 7 in seinem unteren Teil befindet sich der zylindrische Einfülltrichter 11, auf dessen Boden die Rührpumpe 12, z. B. eine mit Elektromotor angetriebene Propellerhydropumpe mit einer hohen Leistung von ca. 100 m³/h angebracht ist. Die Rührpumpe 12 nimmt die verschmolzene Reaktionsmasse vom Boden 8 auf und hebt sie oberhalb des oberen Niveaus der Elektrotauchsieder 10 auf die perforierten Überlaufplatten des zweiten Überlaufniveaus hoch. Die auf der Zeichnung nicht sichtbaren Überlaufplatten 13 oder Überlaufrinnen bilden das zweite Überlaufniveau, auf dem eine dünne Schicht des Reaktionsgemischs schnell verdampft und laufend mittels der Rührpumpe 12 ergänzt wird und sein zusätzlich mit den oberen Tauchsiedern angewärmter Überfluss fließt durch die Öffnungen zur unteren Schicht im Gefäßboden herunter. Diese Lösung vergrößert die Rührintensität, maximiert den Wärmeaustausch zwischen den Tauchsiedern und der verschmolzenen Reaktionsmasse, intensiviert den Kontakt des verschmolzenen Rohstoffes mit dem Katalysator und vergrößert die Verdampfungsfläche. All das beschleunigt wesentlich die Reaktionen des im thermokatalytischen Reaktor stattfindenden Prozesses. Innerhalb des Reaktorgehäuses 6 an seinem Boden befinden sich Einblasrohre 14, die mit den Elektrotauchsiedern 10 verbunden sind und das Kohlendioxid CO₂ oder ein anderes Inertgas aus diesen Tauchsiedern zum Reaktionsgemisch ableiten. Dieses in Tauchsiederrohren auf eine Temperatur von ca. 400°C erhitzte Gas erreicht das Reaktionsgemisch durch die Öffnungen in den Einblasrohren 14, bewirkt den Effekt des pneumatischen Rührens und wärmt zusätzlich das Gemisch an. Das unterstützt die Rührintensität, vergrößert die Verdampfungsfläche des Reaktionsgemischs und beschleunigt die Wärmeverteilung. In der Anlaufphase wird die leere Vorrichtung durch das heiße Kohlendioxid auf Betriebstemperatur erhitzt, und während des Vorrichtungsbetriebs ermöglicht es eine präzise Regulierung der Tauchsiedertemperatur. Der Reaktor 6 ist mit einem auf dem Oberdeckel 9 angebrachten Katalysatordosierer 15 ausgestattet, der den Katalysator zum verschmolzenen Rohstoff zuführt. Der Katalysatordosierer weist einen Katalysatorzubringer 16 auf. In der Vertiefung des Reaktorbodens 8 befindet sich eine Ablassöffnung, an die das Filter 18 angeschlossen ist, das die Beseitigung des deaktivierten Katalysators und des im Gemisch angesammelten Karbonisat aus dem Reaktorgemisch ermöglicht. Im Oberdeckel 9 befindet sich ein Auslaufstutzen 19 für Depolymerisatdämpfe, Gasprodukte der Depolymerisation, der mit einer Rohrleitung mit einem Stutzen 20 für Zufuhr der Depolymerisatdämpfe zur Vorrichtung für sekundäre Depolymerisation 21 (oder direkt mit der Rohrleitung des Fraktionierkondensators 24) verbunden ist. Die Vorrichtung für sekundäre Depolymerisation 21 weist die Form eines senkrechten zylindrischen Durchlaufbehälters auf, in dem sich der Katalysator in granulierter oder einer anderen porösen Form befindet. Die Anlage ist für den katalytischen Depolymerisationsprozess der aus der Vordepolymerisation im Reaktor 6 mit einer höheren Molekülmasse erhaltenen Gasprodukte bestimmt, denn in den Depolymerisatdämfen sind zwischen 20 und 30 % Kohlenwasserstoffpaare mit einer zu langen Kohlenstoffkette (Paraffin) enthalten. Der die Gasprodukte zur Anlage 21 zuführende Stutzen 20 ist im oberen Behälterteil angebracht, wo sich auch der Katalysatorzubringer 17 befindet, der den granulierten Katalysator kontinuierlich zuführt. Im unteren Teil des Behälters befinden sich ein Stutzen 22, der die Depolymerisatgasprodukte abnimmt und mit der Rohrleitung des Fraktionierkondensators 24 verbunden ist, sowie eine Vorrichtung für Katalysatorabfuhr 23, die den verbrauchten Katalysator kontinuierlich ableitet. Diese Anlage ermöglicht die Regulierung der Kontaktzeiten zwischen den Depolymerisatgasprodukten und dem Katalysator durch die Regelung der Katalysatorschichtstärke. Die Vorrichtung für sekundäre Depolymerisation 21 ist auf der Rohrleitung angebracht, die das Aggregat mit dem Fraktionierkondensator 24 verbindet. Der Fraktionierkondensator 24 hat eine Quaderform und ist mit Rohren gefüllt, in denen die Kühlflüssigkeit gegenläufig zu den die Rohre abwaschenden heißen Dämpfen der Depolymerisationsprodukte fließt. Das gravitationsmäßig die Kondensatorrohre entlang abfließende Kondensat sammelt sich ohne gegenseitige Vermischung der einzelnen Fraktionen auf seinem Boden und wird in separate Behälter abgeleitet. Der Fraktionierkondensator 24 ist mit einer Rohrleitung mit dem Stromerzeugungsaggregat 25 in Form eines den Stromgenerator antreibenden Verbrennungsmotors verbunden. Brennbare Prozessgase, die in Normalbedingungen nicht kondensieren (Kohlenwasserstoffe mit der Länge der Kohlenstoffkette C₁ bis C₄) und mit einer Lüfterpumpe mit einem geringen Unterdruck abgezogen werden, begegnen auf ihrem Weg in dem Kondensatorendteil dem Entnebler und dann werden sie zum Gasaggregat hingeleitet und zur Erzeugung der für die Speisung der Elektrotauchsieder und anderer Anlagevorrichtungen notwendigen Elektroenergie verwendet. Die Verwendung der mit dem Kohlendioxiddurchlauf stabilisierten Elektrotauchsieder im Reaktor ermöglicht den Betrieb auf einem niedrigen Temperaturgradienten und dem thermischen Hauptwiderstand des Wärmeaustausches an der Seite der verschmolzenen Rohstoffmasse und der Depolymerisationsprodukte. Dadurch wird bei gleichzeitigem intensivem Rühren die Bildung größerer Karbonisatmengen verhindert und eine präzise Temperatursteuerung infolge einer minimalen thermischen Trägheit der Heizelemente ermöglicht (im Heizsystem ist kein Wärmeübertragungsmittel für größere Entfernungen vorhanden). Eine vergrößerte Verdampfungsfläche im Reaktor, die durch die Separation des beheizten Produktes in Schichten und eine unabhängige Beheizung der Überlaufplatten sowie die Nutzung des Effekts des pneumatischen Rührens des Reaktionsgemisches mit heißem Kohlendioxid erreicht wird, ermöglicht ein schnelles Herauskommen aus der Reaktions- und Kontaktzone der flüchtigen Produkte mit dem Katalysator in der jeweiligen Temperatur und unter einem bestimmten Druck und verhindert das ungünstige Entstehen von Gasübermengen.

### Beispiel II

Zerkleinerter Polyolefinrohstoff wird zum Speicherbehälter 1, von da weiter zum Einfülltrichter 2 und dann mit der Transportschnecke 3 zur Schmelze 4 transportiert. In der Schmelze wird das PE+PP-Granulat mit der Paraffinfraktion mit einer Temperatur von 280°C vermischt, es wird aufgeschmolzen und auf eine Temperatur von 180°C mit einem Wärmeteil dieser Fraktion und Wärme, die von der Rückgewinnung diaphragmal zugeführt wird, erhitzt. Danach wird der verschmolzene Rohstoff durch den Vorwärmer 5 zum thermokatalytischen Reaktor 6 abgeleitet. Die Dämpfe aus der Schmelze werden mittels eines auf der Zeichnung nicht sichtbaren Lüfters abgezogen und zusammen mit der Gasfraktion zur Verbrennung hingeleitet.

Im thermokatalytischen Reaktor 6 wird der Rohstoff mit den Elektrotauchsiedern auf eine Temperatur von 420°C unter gleichzeitiger Zufuhr des Aluminium-Silizium-Katalysators erhitzt und unter Verwendung der Hochleistungsrührpumpe 12 intensiv gerührt. Der Katalysator wird mit dem Dosierer 16 zum Reaktor 6 über den Flüssigkeitsspiegel des Reaktionsgemisches in der Menge von 1,5% seines Gehaltes im Reaktor eingeführt. Der verbrauchte Katalysator samt dem entstandenen Karbonisat bildet einen Produktionsabfall, der mit der Zahnradpumpe auf das keramische Filter 18 mit ÖI-Rezyklus zum Reaktor abgeleitet wird. Der Rührprozess wird zusätzlich durch pneumatisches Rühren mit erhitztem Kohlendioxid CO₂ unterstützt, das die Temperatur der Elektrotauchsieder stabilisiert, was die Spaltung der Kohlenstoffkette des Polyethylen und Polypropylen, das so genannte katalytische Cracken, zu Folge hat. Es wird ein Spaltungsprodukt in Form eines Kohlenwasserstoffgemischs mit der Kohlenstofflänge von C₂ bis C₃₄ erhalten. Infolge der im Reaktor stattfindenden Umwandlungen wird der Katalysator allmählich verbraucht. Der verbrauchte Katalysator mit dem entstandenen Karbonisat wird aus dem Reaktor in Form einer Ölsuspension durch seinen unteren Ablass periodisch abgeleitet und mit einer Zahnradpumpe auf das keramische Filter 18 mit dem ÖI-Rezyklus zum Reaktor weitergeleitet. In Bezug auf die Anforderungen zur Zusammensetzung des Crackproduktes wird der Prozess in zwei Stufen durchgeführt, d. h. im thermokatalytischen Reaktor 6 auf dem zerkleinerten Katalysator, der in der flüssigen Phase des Reaktionsgemischs mit einer Temperatur von 400°C dispergiert ist und dann im Behälter der Vorrichtung für sekundäre Depolymerisation 21, auf dem Bett des granulierten Katalysators unter Durchfluss der Kohlenwasserstoffe aus dem Vorcracken mit einer Temperatur von 420°C. Der im Prozess des katalytischen Crackens in der Dampfphase eingesetzte granulierte Katalysator wird auch allmählich deaktiviert, aus dem Behälter mit der Ableitvorrichtung 23 periodisch abgeleitet und zur Regenerierung weitergeleitet. Das Behälterdefizit wird mit einem frischen Katalysator ergänzt. Die aus dem Behälter für sekundäre Depolymerisation abgeleiteten Gase und Dämpfe mit einer Temperatur von 420°C werden zum Fraktionierkondensator 24 hingeleitet, wo sie in dem Rohrzwischenraum bei gleichzeitigem Rückfluss der Paraffinfraktion (420-280°C) und des Treiböls (280-180°C) sowie der Benzinfraktion (180-35°C) auf 35°C abgekühlt werden. Die Rückflussfraktionen werden zu Speicherbehältern hingeleitet, wobei die erforderliche Menge der Paraffinfraktion zur Schmelze 4 hingeleitet wird, wo sie mit dem Rohstoff gemischt wird. Brennbare Prozessgase aus dem Fraktionierkondensator 24, die unter normalen Umständen nicht kondensieren (Kohlenwasserstoffe mit der Kohlenstoffkette von C₁ bis C₄), werden zum Gasstromerzeugungsaggregat zugeführt und für die Erzeugung der Elektroenergie verwendet, die für die Speisung der Elektrotauchsieder und anderer Anlagenteile notwendig ist.

### Bezugszeichenliste

1 - Rohstoffspeicherbehälter
2 - Einfülltrichter
3 - Rohstoffzubringer
4 - Schmelze
5 - Vorwärmer
6 - thermokatalytischer Reaktor
7 - Gehäuse
8 - Boden
9 - Oberklappe
10 - Elektrotauchsieder
11 - Überlauftrichter
12 - Rührpumpe
13 - Überlaufplatte
14 - Einblasrohr
15 - Katalysatordosierer
16 - Katalysatorzubringer
17 - Katalysatorzubringer
18 - Filter
19 - Auslaufstutzen für Gasprodukte
20 - Zufuhrstutzen für Gasprodukte
21 - Vorrichtung für sekundäre Depolymerisation
22 - Abnahmestutzen für Gasprodukte
23 - Vorrichtung für Ableitung des verbrauchten Katalysators
24 - Fraktionierkondensator
25 - Stromerzeugungsaggregat

## Patentansprüche

1. Verfahren der thermokatalytischen Depolymerisation von Kunststoffabfällen, und insbesondere Polyolefinkunststoffabfällen zum Gemisch von ungesättigten und gesättigten Kohlenwasserstoffen, bei der der zerkleinerte Rohstoff in der Schmelze plastifiziert, durch Anheizen in den flüssigen Zustand gebracht wird, im thermokatalytischen Reaktor in Anwesenheit eines Katalysators katalytisch transformiert und die Reaktionsprodukte als Gase zum Fraktionierkondensator abgeleitet werden, in dem es abgekühlt, verflüssigt und in Fraktionen mit verschiedenen Siedepunkten geteilt wird, **dadurch gekennzeichnet, dass** das flüssige Reaktionsgemisch in dem thermokatalytischen Reaktor (6) gemischt und in mindestens zwei Schichten separiert wird, die sich auf verschiedenen Niveaus befinden, wobei jede Schicht unabhängig von der anderen mittels Heizelementen angewärmt wird, die prinzipiell quer zu der vertikalen Reaktorachse verlaufen, vorteilhafterweise in Form von Elektrotauchsiedern (10) in Rohrverkleidung, die in Pakete verblockt und vorteilhafterweise mit Inertgasen oder Metalloxiden stabilisiert wird.

2. Verfahren nach Anspruch 1, **dadurch gekennzeichnet, dass** das Reaktionsgemisch mittels einer Rührpumpe (12), vorteilhafterweise einer Hochleistungspropellerpumpe verteilt und hochgehoben wird, wobei das Gemisch auf perforierte Überlaufplatten (13) oder Überlaufrinnen zugeführt wird, die sich oberhalb des Gemischunterschichtspiegels quer zur vertikalen Achse des Reaktors (6) befinden.

3. Verfahren nach Anspruch 1 oder 2, **dadurch gekennzeichnet, dass** die kinetische und Wärmeenergie des Reaktionsgemischs durch pneumatisches Rühren unter Anwendung von CO₂ oder eines anderen Inertgases unterstützt wird, wobei vorteilhafterweise das von der stabilisierenden Zirkulation der Elektrotauchsieder (10) kommende Gas verwendet wird.

4. Verfahren nach Anspruch 1 oder 3, **dadurch gekennzeichnet, dass** die Gasprodukte der katalytischen Reaktion vor der Zufuhr zum Fraktionierkondensator (24) durch eine poröse Katalysatorschicht, vorteilhafterweise in Form des in der Vorrichtung für sekundäre Depolymerisation (21) enthaltenen Granulats, durchgelassen werden.

5. Verfahren nach Anspruch 1 oder 4, **dadurch gekennzeichnet, dass** die nicht verflüssigten Nachkondensationsgase aus dem Fraktionierkondensator (24) zum Stromerzeugungsaggregat (25) hingeleitet werden, das aus dem Verbrennungsmotor und dem Stromgenerator besteht, wobei die erzeugte Elektroenergie vorteilhafterweise für die Speisung der Elektrotauchsieder (10) oder anderer Anlagevorrichtungen verwendet wird.

6. Verfahren nach Anspruch 1 oder 4, **dadurch gekennzeichnet, dass** der Katalysator entweder in Dosen oder kontinuierlich zum thermokatalytischen Reaktor (6) zugeführt wird.

7. Verfahren nach Anspruch 4, **dadurch gekennzeichnet, dass** der Katalysator entweder in Dosen oder kontinuierlich zum Behälter der Vorrichtung für sekundäre Depolymerisation (21) zugeführt wird.

8. Verfahren nach Anspruch 1 oder 6, **dadurch gekennzeichnet, dass** der im Prozess verbrauchte Katalysator samt dem im Reaktor (6) entstandenen Karbonisat aus dem Reaktor auf das vorteilhafterweise keramische Filter (18) mit dem ÖI-Rezyklus zum thermokatalytischen Reaktor (6) abgeleitet wird.

9. Anlage für thermokatalytische Depolymerisation von Kunststoffabfällen, insbesondere Polyolefinkunststoffabfällen, die aus dem Speicherbehälter, dem Rohstoffzubringer, der Schmelze, dem Vorwärmer und dem thermokatalytischen Reaktor mit Heizelementen, der mit dem Fraktionierkondensator verbunden ist, besteht, **dadurch gekennzeichnet, dass** sie über eine Vorrichtung für sekundäre Depolymerisation (21) verfügt, in der die Gasprodukte der katalytischen Reaktion aus dem thermokatalytischen Reaktor (6) unter Katalysatoranwesenheit depolymerisiert werden, wobei diese Vorrichtung mittels eines die Gasprodukte zuführenden Stutzens (20) mit dem Reaktor und mittels eines Stutzens für die Gasproduktabnahme (22) mit der Fraktionierkondensator (24) verbunden ist.

10. Anlage nach Anspruch 9, **dadurch gekennzeichnet, dass** die Vorrichtung für sekundäre Depolymerisation (21) die Form eines senkrechten Durchlaufbehälters aufweist, der mit einer porösen Katalysatorschicht, vorteilhafterweise in Granulatform, gefüllt ist.

11. Anlage nach Anspruch 10, **dadurch gekennzeichnet, dass** die Vorrichtung für sekundäre Depolymerisation (21) einen Katalysatorzubringer (17) und eine Ableitungsvorrichtung für den verbrauchten Katalysator (23) aufweist.

12. Anlage nach Anspruch 9, **dadurch gekennzeichnet, dass** der thermokatalytische Reaktor (6) über eine Vorrichtung zum Separieren der flüssigen Reaktionsmasse in Schichten, die übereinander angebracht sind, in Form einer Rührpumpe (12), einer horizontalen Überlaufplatte (13) oder Überlaufrinnen oberhalb des Reaktionsgemischspiegels sowie über diesen Schichten zugeordnete Heizelemente (10) verfügt.

13. Anlage nach Anspruch 12, **dadurch gekennzeichnet, dass** die Heizelemente des thermokatalytischen Reaktors (6) die Elektrotauchsieder (10) bilden, die in Pakete verblockten Rohren gesetzt und getrennt in Öffnungen auf dem Gehäuseumfang (7) befestigt, zentripetal gerichtet und auf zwei Niveaus gelegen sind, unten in der Nähe des Reaktorbodens (8) und oben oberhalb oder unterhalb der porösen Überlaufplatten (13) oder Überlaufrinnen, die sich über dem Spiegel der flüssigen Reaktionsmasse, quer zu der senkrechten Gehäuseachse (7) befinden.

14. Anlage nach Anspruch 12 oder 13, **dadurch gekennzeichnet, dass** der Reaktor (6) über installierte Einblasrohre (14) verfügt, die CO₂ oder ein anderes Inertgas aus den Rohren der Elektrotauchsieder (10) zum Reaktionsgemisch ableiten.

15. Anlage nach Anspruch 9, **dadurch gekennzeichnet, dass** der thermokatalytische Reaktor (6) über den Katalysatordosierer (15) mit einem Zubringer (16) und im unteren Teil über eine Vorrichtung für die Ableitung des verbrauchten Katalysators samt dem Karbonisat mit einem ÖI-Rezyklus zum Reaktor verfügt, wobei diese Vorrichtung vorteilhafterweise aus der Zahnradpumpe und dem keramischen Filter (18) besteht.

16. Anlage nach Anspruch 9, **dadurch gekennzeichnet, dass** der Fraktionierkondensator (24) mit einer Rohrleitung, die die nicht verflüssigten Nachkondensationsgase abführt, und mit dem Stromgenerator (25) verbunden ist, der aus einem Verbrennungsmotor und einem Stromerzeugungsaggregat besteht.

17. Reaktor für thermokatalytische Depolymerisatition von Kunststoffabfällen mit dem Gehäuse in Form eines thermoisolierten geschlossenen Gefäßes, innerhalb dessen Rohrheizelemente und eine Rührvorrichtung installiert sind, **dadurch gekennzeichnet, dass** er mindestens ein oberes Überlaufniveau für das Reaktionsgemisch besitzt, das sich über dem Spiegel des Reaktionsgemisches auf dem Gehäuseboden (7) befindet; wobei dieses Überlaufniveau die Form von perforierten Überlaufplatten (13) oder Überlaufrinnen aufweist, die quer zu der senkrechten Gehäuseachse (7) verlaufen, wobei das Reaktionsgemisch auf jedem Niveau eine unabhängige Heizung mit Heizelementen (10) besitzt, die auf quer zur senkrechten Gehäuseachse (7) gelegenen Flächen verlaufen, in der unteren Schicht des Reaktionsgemisches eingetaucht sind und sich möglichst nahe oberhalb oder unterhalb der Überlaufplatten (13) befinden, wobei die Rühr- und Hebevorrichtung für die Flüssigkeit eine Elektromotorrührpumpe (12) bildet, die mit einem Elektromotor angetrieben wird und in der Nähe des Reaktorbodens angebracht ist.

18. Reaktor nach Anspruch 17, **dadurch gekennzeichnet, dass** die Heizelemente die Form der Elektrotauchsieder (10) in Rohrverkleidung, die mit CO₂ oder einem anderen Inertgas stabilisiert werden, wobei die Tauchsieder in Pakete verblockt, getrennt in Öffnungen auf dem Gehäuseumfang befestigt und zentripetal gerichtet sind.

19. Reaktor nach Anspruch 17, **dadurch gekennzeichnet, dass** das Gehäuse (7) die Form eines mit Ober- und Unterdeckeln geschlossenen Gefäßes aufweist, wobei der den Boden (8) bildende Unterdeckel und der Oberdeckel (9) vorteilhafterweise die Form von nach außen konvexen Konen aufweisen und die Rührpumpe (12) sich in einem zylindrischen und senkrechten Überlauftrichter (11) befindet, der zentral in der unteren Schicht des Reaktionsgemischs angebracht ist.

20. Reaktor nach Anspruch 17, **dadurch gekennzeichnet, dass** er in dem unteren Teil über eine Vorrichtung für eine kontinuierliche Abfuhr des verbrauchten Katalysators und Karbonisates, vorteilhafterweise in Form einer Pumpe und eines vorteilhafterweise keramischen Filters (18) mit ÖI-Rezyklus zum thermokatalytischen Reaktor (6) verfügt.

21. Reaktor nach Anspruch 18 oder 19, **dadurch gekennzeichnet, dass** er über Einblasrohre (14) verfügt, die mit den Rohren der Elektrotauchsieder (10) verbunden sind und das CO₂ oder ein anderes Inertgas aus den Tauchsiedern zum Reaktionsgemisch der unteren Schicht im Reaktorboden (8) ableiten.

22. Reaktor nach Anspruch 17 oder 19, **dadurch gekennzeichnet, dass** er mit dem Katalysatordosierer (15) ausgestattet ist.

23. Reaktor nach Anspruch 22, **dadurch gekennzeichnet, dass** der Katalysatordosierer (15) über den Katalysatorzubringer (16) verfügt.
